# EUROPEAN PATENT SPECIFICATION

(11) **EP 1 919 653 B1**
(45) Date of publication and mention of the grant of the patent: **23.09.2015**
(21) Application number: 06778098.1
(22) Date of filing: 01.08.2006
(51) Int. Cl.: B23K 35/02, B23K 35/26, B23K 1/005, B23K 9/173, B23K 26/32, B23K 31/02, B23K 10/02, B23K 15/00

(54) **METHOD OF ARC OR BEAM BRAZING/WELDING OF WORKSPIECES OF IDENTICAL OR DIFFERENT METALS OR METAL ALLOYS WITH ADDITIONAL MATERIALS OF SN BASE ALLOYS ; SN BASE ALLOY WIRE**
VERFAHREN FÜR LICHTBOGEN- ODER STRAHLLÖTEN/-SCHWEISSEN VON WERKSTÜCKEN AUS IDENTISCHEN ODER VERSCHIEDENEN METALLEN ODER METALLLEGIERUNGEN MIT ZUSÄTZLICHEN MATERIALIEN AUS LEGIERUNGEN AUF SN-BASIS; DRAHT AUS LEGIERUNG AUF SN-BASIS
PROCEDE DE BRASAGE/SOUDAGE A L'ARC OU AU FAISCEAU DE PIECES CONSTITUEES DE METAUX OU D'ALLIAGES METALLIQUES IDENTIQUES OU DIFFERENTS A L'AIDE DE MATERIAUX SUPPLEMENTAIRES D'ALLIAGES A BASE DE SN ; FIL EN ALLIAGE A BASE DE SN

(30) Priority: 05.08.2005 EP 05107234
(43) Date of publication of application: 14.05.2008
(73) Proprietor: Grillo-Werke AG, D-47169 Duisburg (DE)
(72) Inventor: SPRIESTERSBACH, Jochen, 47058 Duisburg (DE); WISNIEWSKI, Jürgen, 46487 Wesel (DE); PRENGER, Frank, 40885 Ratingen (DE)
(74) Representative: Godemeyer Blum Lenze Patentanwälte Partnerschaft mbB - werkpatent
(86) International application number: PCT/EP2006/064892
(87) International publication number: WO 2007/017413

(56) References cited:
- EP-A- 0 336 575
- EP-A- 1 439 041
- EP-A- 1 462 207
- WO-A-99/04048
- US-A- 3 963 162
- US-A- 4 670 217
- US-A1- 2002 050 487
- IRVING B: "HOST OF NEW LEAD-FREE SOLDERS INTRODUCED" WELDING JOURNAL, AMERICAN WELDING SOCIETY, MIAMI, FL, US, vol. 71, no. 10, 1 October 1992 (1992-10-01), pages 47-49, XP000310155 ISSN: 0043-2296

## Description

The invention is directed to a method of arc or beam brazing/welding of workpieces of identical or different metals or metal alloys, using an additional Sn base metal alloy according to the preamble of claim 1. Workpieces made of steel, cast iron, nickel, cadmium, beryllium, titanium, molybdenum, magnesium, aluminum, copper, lead, zinc, tin, hard metal and alloys thereof are welded or brazed, and the workpieces to be joined may consist of identical or different metals or metal alloys.

The invention is also directed to a method of filling gaps or dents in workpieces made of steel, cast iron, nickel, cadmium, beryllium, titanium, molybdenum, magnesium, aluminum, copper, lead, zinc, tin, hard metal and alloys thereof, according to the preamble of claim 7.

The invention is also directed to a wire according to the preamble of claim 13. that is used in the above-mentioned methods.

In the motor manufacturing industry and particularly in car manufacture, the use of a variety of light metal components in bodywork construction has become common practice in order to reduce the overall weight of the bodywork, which has a positive effect on the overall fuel consumption. Frequently, components made of aluminum, aluminum alloys or magnesium alloys are being used in this context. In fact, vehicles are now being marketed wherein these materials constitute much more than half of the bodywork thereof. US 6 525 293 B describes methods and a wire according to the preamble of claims 1, 7 and 13.

The change of materials used in bodywork construction has also necessitated a corresponding adaptation of the prior art joining processes. While earlier bodywork construction essentially required sheet steel joining, it has now become necessary to provide joints between different materials in a way so as to allow use thereof in an industrial production process without major complications. Particularly with respect to thin sheet metal used in lightweight construction, there is a high risk of distortion of component parts or destruction of coatings as a result of introducing large amounts of heat during the joining process.

To join sheet steel, such as galvanized thin sheet metal frequently used in bodywork construction, the prior art uses inert gas welding or inert gas brazing, among other things. Such methods have been described in DIN 1910-2.

Metal inert gas welding is a method wherein a workpiece in the area to be welded is fused by means of an arc burning between a wire electrode in a flow of inert gas and the workpiece. The wire electrode may include welding additives and has to be adjusted to the material to be welded. In this way, the workpiece areas to be welded are joined with each other.

In beam welding/brazing, the energy employed in the joining process is introduced via light, laser or electron beam sources.

Using the above methods, steel as well as nonferrous metals are welded together.

An alternative method is metal inert gas brazing which differs from metal inert gas welding merely by the fact that a solder melting lower than the base materials to be joined is used as wire electrode, so that the entire process can be carried out at lower temperatures.

This method, also referred to as "MIG brazing", has gained acceptance particularly in joining galvanized thin sheet metal in the automobile industry. Compared to the corresponding welding methods, it offers the advantage of higher process safety, improved quality of the brazing seams, and high joint strength, as well as high corrosion resistance of the joined metal parts. In this method, noble gases (e.g. argon) or mixtures of gases with active components can be used as inert gas for welding. These gas mixtures include components capable of generating smoother brazing seams and good seam transitions to the base material. To this end, a mixture of argon with minor amounts of oxygen is used, for example.

Brazing solders or high-temperature solders such as copper base wires are employed as solder. Essentially, they consist of copper including various alloying elements such as silicon, aluminum, tin, nickel, zinc and manganese. The melting point of the solders is about 950 to 1400°C, and this is the region where such brazing is performed.

Solders with lower melting points than those of copper base wires consist e.g. of Zn, Al or Sn base alloys. To date, particularly SnPb alloys have been used in flame brazing using a blowtorch or gas burner, or using a soldering iron, in which methods the filling of dents or sealing of cracks represents the predominant purpose. In another use, these solder materials are employed in furnace brazing in heat exchanger construction.

The invention described below is intended to provide an improvement of arc or beam welding/brazing so as to allow similar joining of materials with each other and of different metals and metal alloys, especially those made of steel, cast iron, nickel, cadmium, beryllium, titanium, molybdenum, magnesium, aluminum, copper, lead, zinc, tin, hard metal and alloys thereof. Joining such materials by means of arc or beam welding/brazing using tin base solders has not been described as yet. Using the methods and additional materials according to the invention, sealing of cracks, filling of gaps between component parts and filling of dents is possible with low input of energy even in an automated fashion.

The European patent application EP 1 462 207 A1 discloses a method for inert gas welding or inert gas brazing of workpieces made of identical or different metals or metal alloys, using a Zn/Al additional material. By using the zinc-aluminum alloy as solder material, the method can be performed at temperatures between 350 and 450°C.

The technical object of the invention was therefore to modify the arc or beam welding/brazing methods known from the prior art such that, in addition to joining identical metals, the methods would also be suitable in joining different metals, particularly of steel, cast iron, nickel, cadmium, beryllium, titanium, molybdenum, magnesium, aluminum, copper, lead, zinc, tin, hard metal and alloys thereof, and, in addition, would be suitable in joining thin-walled, coated or low-melting materials by further reducing the melting temperature of the alloys employed, without substantially reducing the strength of the joint.

The above technical object is accomplished by means of a method of arc or beam welding/brazing of workpieces (A) made of steel, cast iron, nickel, cadmium, beryllium, titanium, molybdenum, magnesium, aluminum, copper, lead, zinc, tin, hard metal and alloys thereof with workpieces (B) made of steel, cast iron, nickel, cadmium, beryllium, titanium, molybdenum, magnesium, aluminum, copper, lead, zinc, tin, hard metal and alloys thereof, wherein said workpieces (A) and (B) may consist of identical or different metals or metal alloys, using an additional metal alloy according to claim 1.

One or more of steps a) through d) can be carried out using an inert gas. As inert gases in the meaning of the invention, those gases or mixtures of gases can be used which do not undergo any reaction with the additional metal alloy or with the material of the workpieces during the process: In a preferred fashion, noble gases are used to this end, especially argon. On the other hand, it is also possible to use mixtures of gases comprising inert gases together with active gases having an effect on the process or on alloy formation. For example, these include mixtures of gases comprising argon and minor amounts of oxygen or carbon dioxide.

By employing said tin base alloys as additional metal alloy, workpieces made of different metallic materials can be joined in a single-step process which can also be performed in a continuous and automated fashion. Owing to the lower melting temperature of the tin base alloy, ranging from 150°C to 400°C, preferably from 180°C to 350°C and more preferably from 200°C to 300°C, the entire process can be carried out at lower temperatures compared to previous inert gas brazing methods, being performed at about 1000°C. As a result, there is substantially less distortion of component parts because operations are possible at lower temperature in total. In particular, this also permits joining of very thin or coated materials such as bands or metal sheets made of steel, cast iron, nickel, cadmium, beryllium, titanium, molybdenum, magnesium, aluminum, copper, lead, zinc, tin, hard metal and alloys thereof having a thickness of less than 1 mm. Furthermore, the lower temperature saves a considerable expense of energy in favor of the brazing process. Owing to the good gap filling of the Sn-based solder materials, highly effective sealing of joints and dents is possible.

Another advantage is that steel components, if used in the form of galvanized sheet steel, would not be damaged in their zinc coat owing to the lower temperature, that corrosion protection in the area of the welding seam or brazing seam is retained, so that laborious secondary operations to maintain corrosion protection are not necessary. For example, hot-dip galvanized sheet steel with a thickness below 1 mm, e.g. between 0.3 to 1.0 mm, can be used.

Zinc has a melting point of 419°C and a boiling point of 908°C. Consequently, at brazing temperatures in a range of 1000°C, a major amount of the zinc coating of the sheet steel will evaporate. On the one hand, this interferes with the joining process and the strength of the joint and, on the other hand, results in a reduction of the corrosion resistance of the sheet steel, which is to be achieved by such zinc coating and will be destroyed during the joining process. By virtue of the method according to the invention, joining is effected at substantially lower temperatures, ranging e.g. between 200 and 300°C, so that the above problem is avoided.

Another advantage of the method according to the invention is that the low melting temperatures of the alloys being used allow joining even of low-melting base materials such as zinc sheets used e.g. in the sector of construction. Moreover, it is possible to join sensitive or laminated materials.

Another advantage lies in the fact that e.g. nickel, beryllium or titanium base materials can be brazed without using aggressive fluxing agents.

Furthermore, the brazing joint thus produced was found to have high strength and good corrosion resistance.

In a preferred embodiment, the method uses workpieces made of steel comprising galvanized or non-galvanized steel. Today, fine and galvanized thin sheet metals intended to prolong the lifetime of vehicles are frequently used in the motor manufacturing industry. The average percentage of such sheet metals in bodywork construction is more than 70% today. As a consequence, most of the motor manufacturers meanwhile grant anti-rust guarantee periods of up to 12 years.

In a preferred embodiment the metallic materials consist of steel, cast iron, nickel, cadmium, beryllium, titanium, molybdenum, magnesium, aluminum, copper, lead, zinc, tin, hard metal and alloys thereof. Particularly preferred are aluminum and aluminum alloys and aluminum-magnesium alloys frequently being used in the motor manufacturing industry today. They have good mechanical properties and, owing to their low specific weight, result in a reduction of the bodywork overall weight and thus in a reduction of fuel consumption. In a particularly preferred embodiment, materials made of steel, especially galvanized steel, are envisaged for joining with materials made of aluminum, aluminum alloys, magnesium, magnesium alloys, as well as zinc and zinc alloys. In a preferred fashion, a binary tin base alloy with zinc or copper, i.e., SnZn or SnCu alloy, or a ternary alloy comprising the system SnZnCu is used to this end.

In a preferred embodiment the method can be used to join zinc and zinc alloys, particularly in the building roofing sector.

In a particularly preferred embodiment the workpieces are joined using the arc welding/brazing method or the beam welding/brazing method.

The above methods are methods wherein a solder is fused by means of an arc or plasma, or a laser light source, and the liquid solder is applied on the spots to be welded/brazed. Such methods are known as arc welding/brazing methods, plasma welding/brazing methods, laser/light welding/brazing methods, or WIG welding/brazing methods, and the methods according to the invention involve the special feature that these methods are performed using a tin base solder.

Particularly preferred is the inert gas welding/brazing method. The arc is burning between a wire electrode and the workpiece. The wire electrode is surrounded by an inert gas nozzle from which inert gas is passed to the spot to be joined. The wire electrode consists of said additional metal alloy, thus representing the solder by means of which the workpiece is joined. This method allows continuous joining of metallic materials in a single-step continuous process. *Inter alia,* is advantageous in that high processing rates can be achieved. Fusion of the additional metal alloy is preferably effected using an electric arc burning between the wire electrode and the workpiece. When joining steel and light metals such as aluminum or magnesium and alloys thereof, the light metals are partially fused in the method according to the invention. Furthermore, a solder is used, so that this method is a combined welding-brazing method.

Another advantage of arc or beam welding/brazing is that heating of the entire component part, as is the case in furnace brazing, is not necessary. Hence, the drawbacks of furnace brazing, such as substantial efforts regarding exact positioning under temperature, risk of distortion and oxidation, are avoided.

The method of the invention can be performed with or without fluxing agents. In general, a fluxing agent is used to facilitate melting of the solder during brazing, promote deposition of particular substances, or prevent oxidation. Especially in the case of aluminum, a fluxing agent is normally used in order to remove the interfering oxide layer. However, the use of fluxing agents is disadvantageous in that most fluxing agents are highly aggressive, causing corrosion of aluminum after joining with other metals. Additional steps are therefore required to remove the fluxing agents following thermal joining. Surprisingly, it has been found that the method of the invention can be performed without using any fluxing agents, and that high-strength and durable joints between the materials to be joined can nevertheless be produced. This is all the more astonishing as it is precisely such joining of different metals, e.g. made of alloys of steel, aluminum or magnesium, where extremely brittle intermetallic phases may be formed, giving rise to inadequate strength of the joint. Obviously, it is precisely this substantially lower temperature required in the method of the invention which avoids formation of said intermetallic phases, thereby achieving a joint higher in strength.

As additional metal alloys, those tin base alloys are according to the present invention used which, in addition to normal impurities, include up to 55 wt.-% zinc and/or up to 5 wt.-% copper and/or up to 5 wt.-% Ag. Particularly preferred are tin alloys including from 10 to 55 wt.-% zinc, and even more preferred are those including from 20 to 52 wt.-% zinc. Likewise preferred are tin alloys including from 2 to 4 wt.-% copper, or from 5 to 10 wt.-% zinc and from 2 to 4 wt.-% copper. More specifically, the following tin alloys can be used: SnZn₂₀, SnZn₃₀, SnZn₅₂, SnCu₃ and SnZn₇Cu₃.

In addition to normal impurities, said tin base alloy may include one or more alloying additives, particularly up to 5 wt.-% Ti, up to 5 wt.-% Sb, up to 2000 ppm Li, up to 5000 ppm Bi, up to 5000 ppm Ce and up to 5000 ppm Ga.

In the method according to the invention, the additional metal alloy is employed in the form of a solid wire or cored wire. If a cored wire is used, the core thereof may include appropriate additives required for brazing. For example, additives can be fluxing agents or metal powders selected from the group comprising aluminum, chromium, titanium, manganese and nickel.

In a preferred fashion the method of the invention is performed in such a way that the wire electrode made of tin base alloy, surrounded by a flow of inert gas, is fused in an arc, plasma or laser, and the fused additional metal alloy is applied on the corresponding contact surfaces or partial areas of the contact surfaces of the positioned workpieces. This is done immediately after fusing the additional metal alloy.

Owing to the high application rate, the method according to the invention also allows simple filling of gaps and dents in sheet metal treatment and bodywork construction. Owing to the low hardness of the alloys being used, secondary treatment of the repair areas is well possible.

Therefore, the invention is also directed to a method of filling gaps or dents in sheet metal treatment and bodywork construction by means of arc or beam welding/brazing of workpieces made of steel, cast iron, nickel, cadmium, beryllium, titanium, molybdenum, magnesium, aluminum, copper, lead, zinc, tin, hard metal and alloys thereof, using a fused additional metal alloy, according to claim 7.

With respect to their implementation and specification of means being used, preferred embodiments of the method of filling gaps or dents correspond to the above-described embodiments of the inventive method of arc or beam welding/brazing.

The invention is also directed to a wire according to claim 13.

In a preferred fashion the wire can be a solid wire or a cored wire.

The invention will be explained in more detail with reference to the following examples.

### Examples

Tests were performed to produce brazed joints of hot-dip galvanized sheet steel, using inert gas welding and various tin base solders.

Hot-dip galvanized sheet steel 0.7 to 1 mm in thickness was used as base material. In one test series, SnZn₂₀, SnZn₅₂ and SnCu₃ solder wires 1.6 mm in diameter in the form of solid wire were used as solder materials. A prior art ZnAl₄Cu_{1.5} solder wire (EP 1 462 207 A1) was used for comparison. Argon was used as inert gas.

The setting angle was 45 to 80°, and the inclination of the torch (electric arc at torch) was 60 to 90°. The spacing between the torch and the workpieces to be joined was 10 to 25 mm at the inert gas nozzle, and the path feed rate during brazing was 0.3 to 1.3 m/min.

It was found that when using the above parameters, it is possible to produce reproducible joints between the steel parts with even welding/brazing seam formation, the seam having a smooth, even surface with good bonding to the base material. Subsequent investigation of the mechanical-technological properties showed that the force which can be applied on the seam cross-section until breaking occurs is comparable to that achieved in brazing with additional Zn base materials. See Table 1 for further test parameters and results obtained.

**Table 1**

| No. | Sample width bO [mm] | Thickness aO [mm] | Joint/solder | Length of measurement LO [mm] | Force Fm [N] | Elongation A tot. mm [mm] |
|---|---|---|---|---|---|---|
| 1 | 44.91 | 1 | St-St-SnCu₃ | 95 | 5862.30 | 3.38 |
| 2 | 44.91 | 1 | St-St-SnZn₂₀ | 95 | 5407.93 | 2.41 |
| 3 | 44.9 | 1 | St-St-SnZn₅₂ | 95 | 5413.32 | 1.85 |
| 4 | 44.12 | 1 | St-St-ZnAl₄Cu_{1.5} | 48 | 5832.45 | 1.53 |

The above results demonstrate that when using the method according to the invention, it is possible to produce e.g. firm and corrosion-resistant joints between steel materials at low temperatures.

In another test series, gaps between component parts with a gap width of 2 mm were filled with a SnZn₇Cu₃ additional material using the MIG method.

## Claims

1. A method for arc or beam welding/brazing of workpieces (A) made of steel, cast iron, nickel, cadmium, beryllium, titanium, molybdenum, magnesium, aluminum, copper, lead, zinc, tin, hard metal and alloys thereof with workpieces (B) made of steel, cast iron, nickel, cadmium, beryllium, titanium, molybdenum, magnesium, aluminum, copper, lead, zinc, tin, hard metal and alloys thereof, wherein said workpieces (A) and (B) may consist of identical or different metals or metal alloys, using a fused additional metal alloy, comprising the step:
a) positioning the workpieces to be joined; and **characterized by** these further steps:
b) fusing the additional metal alloy consisting of an SnZn, SnZnAg, SnCu, SnCuAg, SnZnCu or SnZnCuAg alloy with a level of up to 55 wt% zinc and/or a level of up to 5 wt-% copper and/or up to 5 wt% Ag which, in addition to normal impurities, may include one or more of the following alloying additives as single components or in combination: up to 5 wt% Ti, up to 2000 ppm Li, up to 5000 ppm Bi, up to 5000 ppm Ce, and up to 5000 ppm Ga,
c) applying the fused additional metal alloy on the contact surfaces or partial areas of the contact surfaces between the positioned workpieces; and
d) cooling the joined workpieces;
steps b) and c) being carried out one immediately after the other.

2. The method according to claim 1, **characterized in that** the workpieces made of steel consist of galvanized or non-galvanized steel or coated material.

3. The method according to one or more of claims 1 or 2, **characterized in that** the additional metal alloy is fused in an electric arc or by means of a plasma process or by means of laser or light.

4. The method according to one or more of claims 1 to 3, **characterized in that** the workpieces are joined using a fluxing agent.

5. The method according to one or more of claims 1 to 4, **characterized in that** one or more of steps a) through d) are performed using an inert gas.

6. The method according to one or more of claims 1 to 5, **characterized in that** the additional metal alloy is employed in the form of a solid wire or cored wire.

7. A method of filling gaps or dents in sheet metal treatment and bodywork construction by means of arc or beam welding/brazing of workpieces made of steel, cast iron, nickel, cadmium, beryllium, titanium, molybdenum, magnesium, aluminum, copper, lead, zinc, tin, hard metal and alloys thereof, using a fused additional metal alloy, **characterized by** the following steps:
a) fusing the additional metal alloy consisting of an SnZn, SnZnAg, SnCu, SnCuAg, SnZnCu or SnZnCuAg alloy with a level of up to 55 wt% zinc and/or a level of up to 5 wt-% copper and/or up to 5 wt% Ag which, in addition to normal impurities, may include one or more of the following alloying additives as single components or in combination: up to 5 wt% Ti, up to 2000 ppm Li, up to 5000 ppm Bi, up to 5000 ppm Ce, and up to 5000 ppm Ga,
b) applying the fused additional metal alloy in gaps or dents of the workpieces, and optionally smoothing the additional material; and
c) cooling the workpieces;
steps a) and b) being carried out one immediately after the other.

8. The method according to claim 7, **characterized in that** the workpieces made of steel consist of galvanized or non-galvanized steel or coated material.

9. The method according to one or more of claims 7 or 8, **characterized in that** the additional metal alloy is fused in an electric arc or by means of a plasma process or by means of laser or light.

10. The method according to one or more of claims 7 to 8, **characterized in that** the method is performed using a fluxing agent.

11. The method according to one or more of claims 9 to 10, **characterized in that** one or more of steps a) through c) are performed using an inert gas.

12. The method according to one or more of claims 7 to 11, **characterized in that** the additional metal alloy is employed in the form of a solid wire or cored wire.

13. A wire , for use as additional material in one of the methods according to claims 1 to 12, **characterized by** having a diameter of 0.8 to 3.2 mm and consisting of an SnZn, , SnZnAg, SnCu, SnCuAg, SnZnCu or SnZnCuAg alloy with a level of up to 55 wt% zinc and/or a level of up to 5 wt-% copper and/or up to 5 wt% Ag which, in addition to normal impurities, may include one or more of the following alloying additives as single components or in combination: up to 5 wt% Ti, up to 2000 ppm Li, up to 5000 ppm Bi, up to 5000 ppm Ce, and up to 5000 ppm Ga.

14. The wire according to claim 13, **characterized in that** the wire is a solid wire or a cored wire.

## Patentansprüche

1. Verfahren für Lichtbogen- oder Strahlschweißen/-löten von Werkstücken (A), gefertigt aus Stahl, Gusseisen, Nickel, Cadmium, Beryllium, Titan, Molybdän, Magnesium, Aluminium, Kupfer, Blei, Zink, Zinn, Hartmetall, sowie Legierungen davon, mit Werkstücken (B), gefertigt aus Stahl, Gusseisen, Nickel, Cadmium, Beryllium, Titan, Molybdän, Magnesium, Aluminium, Kupfer, Blei, Zink, Zinn, Hartmetall, sowie Legierungen davon, wobei die Werkstücke (A) und (B) aus identischen oder unterschiedlichen Metallen oder Metalllegierungen bestehen können, unter Verwendung einer geschmolzenen, zusätzlichen Metalllegierung, umfassend den Schritt:
a) Platzieren der zu verbindenden Werkstücke;
und **gekennzeichnet durch** diese weiteren Schritte:
b) Schmelzen der zusätzlichen Metalllegierung, welche besteht aus einer SnZn-, SnZnAg-, SnCu-, SnCuAg- oder SnZnCuAg-Legierung mit einem Gehalt von bis zu 55 Gew.-% an Zink und/oder einem Gehalt von bis zu 5 Gew.-% an Kupfer und/oder bis zu 5 Gew.-% an Ag, welche, zusätzlich zu gewöhnlichen Fremdbestandteilen, einen oder mehrere der folgenden legierenden Zusätze als einzelne Komponenten oder in Kombination einschließen können: bis zu 5 Gew.-% Ti, bis zu 2000 ppm Li, bis zu 5000 ppm Bi, bis zu 5000 ppm Ce und bis zu 5000 ppm Ga,
c) Aufbringen der geschmolzenen zusätzlichen Metalllegierung auf die Kontaktflächen oder auf Teilflächen der Kontaktflächen zwischen den platzierten Werkstücken; und
d) Kühlen der verbundenen Werkstücke;
wobei die Schritte b) und c) unmittelbar nacheinander ausgeführt werden.

2. Verfahren nach Anspruch 1, **dadurch gekennzeichnet, dass** die aus Stahl gefertigten Werkstücke aus galvanisiertem oder nicht-galvanisiertem Stahl oder beschichtetem Material bestehen.

3. Verfahren nach einem oder mehreren der Ansprüche 1 oder 2, **dadurch gekennzeichnet, dass** die zusätzliche Metalllegierung in einem elektrischen Lichtbogen oder mittels eines Plasma-Verfahrens oder mittels Laser oder Licht geschmolzen wird.

4. Verfahren nach einem oder mehreren der Ansprüche 1 bis 3, **dadurch gekennzeichnet, dass** die Werkstücke unter Verwendung eines Flussmittels verbunden werden.

5. Verfahren nach einem oder mehreren der Ansprüche 1 bis 4, **dadurch gekennzeichnet, dass** einer oder mehrere der Schritte a) bis d) durchgeführt werden unter Verwendung eines Inertgases.

6. Verfahren nach einem oder mehreren der Ansprüche 1 bis 5, **dadurch gekennzeichnet, dass** die zusätzliche Metalllegierung in Form eines Massivdrahtes oder eines Fülldrahtes zum Einsatz kommt.

7. Verfahren zur Auffüllung von Lücken oder Dellen bei der Blechverarbeitung und im Karosseriebau mittels Lichtbogen- oder Strahlschweißen/-löten von Werkstücken, gefertigt aus Stahl, Gusseisen, Nickel, Cadmium, Beryllium, Titan, Molybdän, Magnesium, Aluminium, Kupfer, Blei, Zink, Zinn, Hartmetall, sowie Legierungen davon, unter Verwendung einer geschmolzenen, zusätzlichen Metalllegierung, **gekennzeichnet durch** die folgenden Schritte:
a) Schmelzen der zusätzlichen Metalllegierung, welche besteht aus einer SnZn-, SnZnAg-, SnCu-, SnCuAg-, SnZnCu- oder SnZnCuAg-Legierung mit einem Gehalt von bis zu 55 Gew.-% an Zink und/oder einem Gehalt von bis zu 5 Gew.-% an Kupfer und/oder bis zu 5 Gew.-% an Ag, welche, zusätzlich zu gewöhnlichen Fremdbestandteilen, einen oder mehrere der folgenden legierenden Zusätze als einzelne Komponenten oder in Kombination einschließen können: bis zu 5 Gew.-% Ti, bis zu 2000 ppm Li, bis zu 5000 ppm Bi, bis zu 5000 ppm Ce und bis zu 5000 ppm Ga,
b) Aufbringen der geschmolzenen zusätzlichen Metalllegierung in Lücken oder Dellen der Werkstücke, sowie optional das Glätten des zusätzlichen Materials; und
c) Kühlen der Werkstücke;
wobei die Schritte a) und b) unmittelbar nacheinander ausgeführt werden.

8. Verfahren nach Anspruch 7, **dadurch gekennzeichnet, dass** die aus Stahl gefertigten Werkstücke aus galvanisiertem oder nicht-galvanisiertem Stahl oder beschichtetem Material bestehen.

9. Verfahren nach einem oder mehreren der Ansprüche 7 oder 8, **dadurch gekennzeichnet, dass** die zusätzliche Metalllegierung in einem elektrischen Lichtbogen oder mittels eines Plasma-Verfahrens oder mittels Laser oder Licht geschmolzen wird.

10. Verfahren nach einem oder mehreren der Ansprüche 7 bis 8, **dadurch gekennzeichnet, dass** das Verfahren durchgeführt wird unter Verwendung eines Flussmittels.

11. Verfahren nach einem oder mehreren der Ansprüche 9 bis 10, **dadurch gekennzeichnet, dass** einer oder mehrere der Schritte a) bis c) durchgeführt werden unter Verwendung eines Inertgases.

12. Verfahren nach einem oder mehreren der Ansprüche 7 bis 11, **dadurch gekennzeichnet, dass** die zusätzliche Metalllegierung in Form eines Massivdrahtes oder eines Fülldrahtes zu Einsatz kommt.

13. Draht zur Verwendung als zusätzliches Material in einem der Verfahren nach den Ansprüchen 1 bis 12, **dadurch gekennzeichnet, dass** selbiger einen Durchmesser aufweist von 0,8 bis 3,2 mm und besteht aus einer SnZn-, SnZnAg-, SnCu-, SnCuAg-, SnZnCu- oder SnZnCuAg-Legierung mit einem Gehalt von bis zu 55 Gew.-% an Zink und/oder einem Gehalt von bis zu 5 Gew.-% an Kupfer und/oder bis zu 5 Gew.-% an Ag, welche, zusätzlich zu gewöhnlichen Fremdbestandteilen, einen oder mehrere der folgenden legierenden Zusätze als einzelne Komponenten oder in Kombination einschließen kann: bis zu 5 Gew.-% Ti, bis zu 2000 ppm Li, bis zu 5000 ppm Bi, bis zu 5000 ppm Ce und bis zu 5000 ppm Ga.

14. Draht nach Anspruch 13, **dadurch gekennzeichnet, dass** der Draht ein Massivdraht oder ein Fülldraht ist.

## Revendications

1. Procédé de soudage/brasage à l'arc ou au faisceau de pièces à travailler (A) constituées d'acier, de fonte, de nickel, de cadmium, de béryllium, de titane, de molybdène, de magnésium, d'aluminium, de cuivre, de plomb, de zinc, d'étain, de métal dur et de leurs alliages avec des pièces à travailler (B) constituées d'acier, de fonte, de nickel, de cadmium, de béryllium, de titane, de molybdène, de magnésium, d'aluminium, de cuivre, de plomb, de zinc, d'étain, de métal dur et de leurs alliages, dans lequel lesdites pièces à travailler (A) et (B) peuvent consister en des métaux ou alliages de métaux identiques ou différents, en utilisant un alliage de métal additionnel fusionné, comprenant l'étape de :
a) positionnement des pièces à travailler à joindre ;
et **caractérisé par** ces étapes supplémentaires de :
b) fusion de l'alliage de métal additionnel consistant en un alliage SnZn, SnZnAg, SnCu, SnCuAg, SnZnCu ou SnZnCuAg avec un taux allant jusqu'à 55 % en poids de zinc et/ou un taux allant jusqu'à 5 % en poids de cuivre et/ou jusqu'à 5 % en poids d'Ag qui, en plus d'impuretés normales, peut inclure un ou plusieurs des additifs d'alliage suivants en tant que composants simples ou en combinaison : jusqu'à 5 % en poids de Ti, jusqu'à 2 000 ppm de Li, jusqu'à 5 000 ppm de Bi, jusqu'à 5 000 ppm de Ce, et jusqu'à 5 000 ppm de Ga,
c) application de l'alliage de métal additionnel fusionné sur les surfaces de contact ou des aires partielles des surfaces de contact entre les pièces à travailler positionnées ; et
d) refroidissement des pièces à travailler jointes ;
les étapes b) et c) étant réalisées l'une immédiatement après l'autre.

2. Procédé selon la revendication 1, **caractérisé en ce que** les pièces à travailler constituées d'acier consistent en de l'acier galvanisé ou non galvanisé ou un matériau enrobé.

3. Procédé selon une ou plusieurs des revendications 1 ou 2, **caractérisé en ce que** l'alliage de métal additionnel est fusionné dans un arc électrique ou au moyen d'un processus au plasma ou au moyen d'un laser ou d'une lumière.

4. Procédé selon une ou plusieurs des revendications 1 à 3, **caractérisé en ce que** les pièces à travailler sont jointes en utilisant un fondant.

5. Procédé selon une ou plusieurs des revendications 1 à 4, **caractérisé en ce que** une ou plusieurs des étapes a) à d) sont réalisées en utilisant un gaz inerte.

6. Procédé selon une ou plusieurs des revendications 1 à 5, **caractérisé en ce que** l'alliage de métal additionnel est employé sous la forme d'un fil massif ou d'un fil à noyau.

7. Procédé de remplissage de brèches ou d'enfoncements dans le traitement de tôle et la construction de coques ou caisses au moyen d'un soudage/brasage à l'arc ou en faisceau de pièces à travailler constituées d'acier, de fonte, de nickel, de cadmium, de béryllium, de titane, de molybdène, de magnésium, d'aluminium, de cuivre, de plomb, de zinc, d'étain, de métal dur et de leurs alliages, en utilisant un alliage de métal additionnel fusionné, **caractérisé par** les étapes suivantes de :
a) fusion de l'alliage de métal additionnel consistant en un alliage SnZn, SnZnAg, SnCu, SnCuAg, SnZnCu ou SnZnCuAg avec un taux allant jusqu'à 55 % en poids de zinc et/ou un taux allant jusqu'à 5 % en poids de cuivre et/ou jusqu'à 5 % en poids d'Ag qui, en plus d'impuretés normales, peut inclure un ou plusieurs des additifs d'alliage suivants en tant que composants simples ou en combinaison : jusqu'à 5 % en poids de Ti, jusqu'à 2 000 ppm de Li, jusqu'à 5 000 ppm de Bi, jusqu'à 5 000 ppm de Ce, et jusqu'à 5 000 ppm de Ga,
b) application de l'alliage de métal additionnel fusionné dans des brèches ou enfoncements des pièces à travailler, et facultativement lissage du matériau additionnel ; et
c) refroidissement des pièces à travailler ;
les étapes a) et b) étant réalisées l'une immédiatement après l'autre.

8. Procédé selon la revendication 7, **caractérisé en ce que** les pièces à travailler constituées d'acier consistent en de l'acier galvanisé ou non galvanisé ou un matériau enrobé.

9. Procédé selon une ou plusieurs des revendications 7 ou 8, **caractérisé en ce que** l'alliage de métal additionnel est fusionné dans un arc électrique ou au moyen d'un processus au plasma ou au moyen d'un laser ou d'une lumière.

10. Procédé selon une ou plusieurs des revendications 7 à 8, **caractérisé en ce que** le procédé est réalisé à l'aide d'un fondant.

11. Procédé selon une ou plusieurs des revendications 9 à 10, **caractérisé en ce qu'**une ou plusieurs des étapes a) à c) sont réalisées à l'aide d'un gaz inerte.

12. Procédé selon une ou plusieurs des revendications 7 à 11, **caractérisé en ce que** l'alliage de métal additionnel est employé sous la forme d'un fil massif ou d'un fil à noyau.

13. Fil à utiliser comme matériau additionnel dans un ou plusieurs des procédés selon les revendications 1 à 12, **caractérisé en ce qu'**il a un diamètre de 0,8 à 3,2 mm, et consistant en un alliage SnZn, SnZnAg, SnCu, SnCuAg, SnZnCu ou SnZnCuAg avec un taux allant jusqu'à 55 % en poids de zinc et/ou un taux allant jusqu'à 5 % en poids de cuivre et/ou jusqu'à 5 % en poids d'Ag qui, en plus d'impuretés normales, peut inclure un ou plusieurs des additifs d'alliage suivants en tant que composants simples ou en combinaison : jusqu'à 5 % en poids de Ti, jusqu'à 2 000 ppm de Li, jusqu'à 5 000 ppm de Bi, jusqu'à 5 000 ppm de Ce, et jusqu'à 5 000 ppm de Ga.

14. Fil selon la revendication 13, **caractérisé en ce que** le fil est un fil massif ou un fil à noyau.
